# EUROPEAN PATENT SPECIFICATION

(11) **EP 0 748 715 B1**
(45) Date of publication and mention of the grant of the patent: **21.11.2001**
(21) Application number: 96500074.8
(22) Date of filing: 12.06.1996
(51) Int. Cl.: B60N 2/30

(54) **Auxiliary seat for vehicles**
Zusatzsitz für Fahrzeuge
Siège auxiliaire pour véhicules

(30) Priority: 12.06.1995 ES 9501172
(43) Date of publication of application: 18.12.1996
(73) Proprietor: INDUSTRIAS ESTEBAN, S.A., E-31012 Pamplona (Navarra) (ES)
(72) Inventor: Irmler, Helmut, Industrias Esteban, S.A., 31012 Pamplona, (Navarra) (ES)
(74) Representative: Carpintero Lopez, Francisco

(56) References cited:
- EP-A- 0 572 811
- DE-U- 8 533 952
- DE-U- 9 112 092
- DE-U- 9 320 377

## Description

### SPECIFICATION

### OBJECT OF THE INVENTION

The invention relates to an auxiliary seat for vehicles and in particular to a seat arranged at the front of a passenger vehicle next to the driver, which seat generally lies in the area leading into or at the front door of the vehicle (see, for example, EP-A-0 572 811, corresponding to the preamble of claim 1.)

The auxiliary seat is fitted with a number of improvements with which the armrests can be simply and effectively lifted up toward their inactive position, and the surface area of the cushion making up the seat as such is enlarged.

### BACKGROUND OF THE INVENTION

Auxiliary seats fitted in passenger vehicles, commonly designated "guide or hostess seats", have to meet two conditions, firstly being of little width in order to take up a minimal space, for the seat has to be located in an area in which, when not in use, the seat must allow persons through, and secondly the seat proper must be a tip-up seat in order to take up that same space when inactive or not in use.

Many types of auxiliary seats exist that are fitted with respective armrests which may obviously also be lifted up, which operation is carried out by turning or folding the actual armrest upwards from a horizontal or active position thereof.

One kind of auxiliary seats fitted with respective armrests currently in the market is a seat wherein both the seat cushion and the armrests as such are drawn up to the inactive, i.e. upright, position by means of springs and therefore in order that the user may arrange the seat cushion and the armrests proper horizontal the resistance of the said springs must be overcome. Each armrest is separately driven and so is the actual seat cushion.

This system is inconvenient overall because the resistance of springs, in particular in each armrest, must be overcome at all times.

Seats also exist in which the armrests are connected or jointed to the actual seat cushion by means of rods, thereby for the armrests themselves to be tipped up or down when the cushion is tipped up or down. This solution requires awkward mechanisms that deface the seat as a whole and use up unnecessary space.

Other types of seats also exist in which the armrests are fixed, and therefore in order not to stand as a barrier when the cushion is folded up to the inactive position, the armrests must be very short, to the detriment of comfort in resting the user's arms. If the fixed armrests are long enough to be comfortable, then it is necessary to allow very ample clear space in order to allow persons through.

In other cases, the seat cushion is connected in synchronised fashion to the armrests proper, thereby for the turning movement to be transmitted to the armrests when the seat cushion is tipped up. This system can be deemed efficient, although it certainly requires complex and expensive mechanisms.

In other cases, the seat is structured in such a way that the respective cushion is embedded in the frame or structure of the seat, concurrently with the tipping up of the armrests, when the seat cushion takes up the tipped up or inactive position.

There are also cases in which the seats have no armrests, which clearly requires no mechanism whatsoever to lift the armrests, since there are none, although the person occupying the seat from time to time will not be as comfortable as he would be in a seat fitted with respective armrests.

### DESCRIPTION OF THE INVENTION

The auxiliary seat disclosed herein has been devised to fully solve the foregoing problems and one of its essential features lies in that when the seat cushion tips itself up to the inactive position, it carries the armrests with it to their inactive position, this being achieved because the actual seat cushion is wider at its front and therefore, upon being lifted up in the folding operation, carries the armrests with it, thereby taking them to their inactive position.

The auxiliary seat of the invention as defined in independent claims 1, 3 and 4 is obviously designed to be used in small spaces where passengers in a passenger vehicle must be allowed through, namely in coaches and/or buses for which the statutory ECE 36 standard lays down the characteristics of this kind of auxiliary seats, providing that the requisite way through be clear when the auxiliary seat is not taken, which seat must be folded up or concealed without using any external levers or drives, for the folding/unfolding operation must be automatic or be carried out automatically.

The armrests may be driven by the seat cushion, when the latter is lifted up toward the folding position, by an oversize width at the front of the seat, as noted above and disclosed in claim 1, or fitting rollers or rolls on the sides of the cushion body as disclosed in claim 3, which rollers or rolls impinge upon the underside or bottom of the armrests, carrying the latter up with it as the actual cushion is folded. Free-turning or other slide blocks may also be used to serve this same purpose of carrying the arms in folding them up, in the upward tipping movement, as disclosed in claim 4.

In all cases, and irrespective of the alternative chosen, the seat cushion can lift itself up, i.e. when the user stands up, the cushion swivels and tips itself up to the inactive position.

This folding or tipping system toward the inactive position of the armrests, which are carried when the actual seat cushion is folded, avoids expensive mechanisms, wear due to use, discomfort and a poor external appearance.

A further feature of the invention, namely the presence of two projecting lateral areas at the front of the seat cushion, is disclosed in dependent claim 2.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure 1.- Is a schematic representation of a perspective view of the auxiliary seat made in accordance with the object of the invention, with the seat cushion tipped up carrying the armrests with it.

Figure 2.- Is a front view of the same seat shown in the preceding figure, in an inactive position, clearing showing the greater width of the front of the very seat.

Figure 3.- Is a schematic view of a side elevation of the same seat, applied to a backrest drawn in phantom, showing how the seat cushion pushes and carries with it the armrests in automatically returning to the inactive position.

Figure 4.- Is the same schematic representation of the preceding figure, now with the seat cushion and the actual armrests in the folded or inactive position.

Figure 5.- Is a representation of an overview of the seat shown in the preceding figure, wherein the means carrying the armrests now comprise two rollers fixed to the side of the seat cushion proper.

### PREFERRED EMBODIMENT OF THE INVENTION

With reference to the above figures, the seat of the invention, designed to serve as an auxiliary seat useful in passenger vehicles, includes a cushion (1) mounted upon a structure on which the relevant armrests (2) are also mounted, the above in order that the seat cushion (1) may return automatically, i.e. when it is no longer under pressure, as it is when folded down to the horizontal position to be seated on, it returns to its vertical or tipped-up position, which is obviously the inactive position, in such a way that when the seat cushion (1) returns or is tipped up to the inactive positive, the actual armrests (2) are simultaneously lifted up to their inactive, i.e. vertical, position, because the seat cushion (1) carries the armrests (2), to which end the said seat cushion (1) is wider at the front, defining two projecting lateral areas (3) of suitable ergonomic shape, which projecting areas (3) not only define a carrying means for the armrests (2) when the seat cushion (1) returns toward the inactive position, but moreover define an oversize seat cushion (1) and hence a greater user surface and therefore greater user comfort.

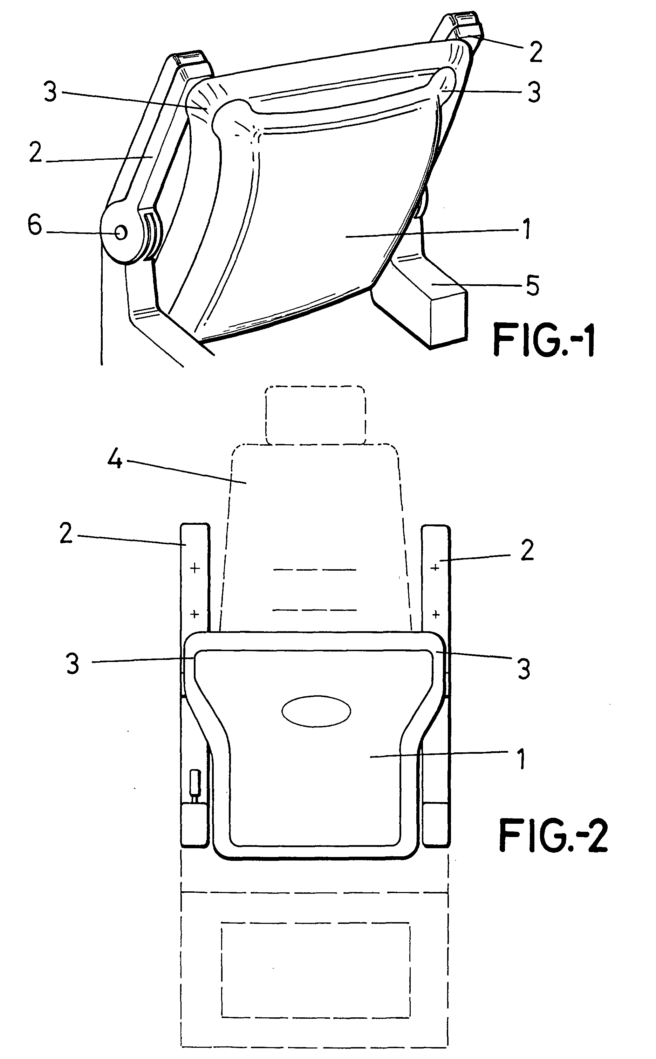

As shown in figures 2, 3 and 4, in the respective structure, the seat (1) is located under the respective backrest (4) whereas the armrests lie collaterally to the backrest.

The structure (5) where the seat cushion (1) is assembled will clearly be fitted with turning means for the seat cushion (1) to be tipped up and down, whereas the armrests will be mounted relative to the actual general structure (5), which may be the actual backrest (4), on respective turning axes (6).

Furthermore, the seat cushion (1) will be connected to means automatically carrying out the folding of the seat toward the tipped up position when the force holding it in the active or horizontal position ceases.

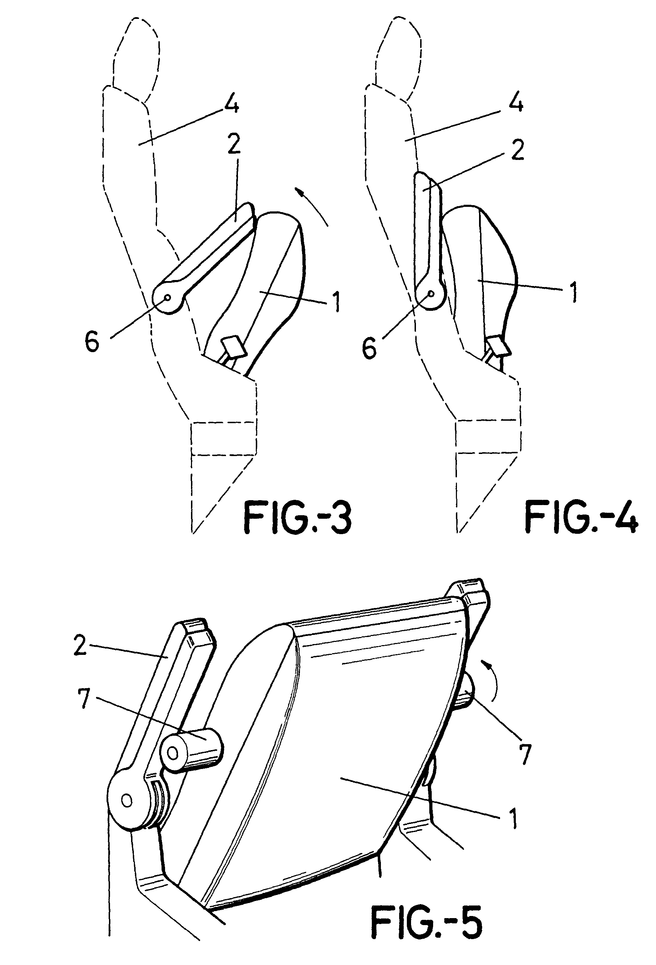

Figure 5 shows an embodiment of the manner in which the armrests (2) are carried, which now comprises rollers (7) located on the sides of the actual seat cushion (1), in which case said seat cushion (1) will have no such projecting lateral areas (3) on its front.

## Claims

1. An auxiliary seat for vehicles of the kind being normally mounted at the front of passenger vehicles next to the driver, generally lying in the area leading into or at the front door of the actual vehicle, and wherein the seat cushion (1) is fitted with automatic means to return from the user position to the inactive position, **characterised in that** said seat cushion (1) has projecting lateral areas (3) defining a greater width of said seat cushion (1) at its front in order that the cushion may, on being tipped up to the inactive position, carry the armrests (2) with it, causing them to swivel up to their inactive position.

2. An auxiliary seat for vehicles according to claim 1, **characterised in that** the wider area of the seat cushion (1) is defined by two projecting lateral areas (3) at the front of said seat cushion (1).

3. An auxiliary seat for vehicles according to the preamble of claim 1, **characterised in that** a pair of rollers or rolls (7) projecting from the sides of the seat cushion (1) defines a greater width of the seat cushion (1) to carry the armrests (2) with it toward the inactive position when the seat cushion (1) itself is tipped up.

4. An auxiliary seat for vehicles according to the preamble of claim 1, **characterised in that** two free-turning or other slide blocks define a greater width of the seat cushion (1) to carry the armrests (2) with it toward the inactive position when the seat cushion (1) itself is tipped up.

## Patentansprüche

1. Zusatzsitz für Fahrzeuge, wie er normalerweise vorn neben dem Fahrersitz in Fahrzeugen für den Personentransport im Bereich des Eingangs bzw. der vorderen Tür des Fahrzeugs angeordnet wird , bei welchem das Sitzkissen (1) mit Mitteln für die automatische Rückkehr von der Gebrauchsstellung in die Ruhestellung ausgestattet ist, hauptsächlich **dadurch gekennzeichnet, dass** das Sitzkissen (1) seitliche Vorsprünge (3) aufweist, durch welche das Kissen (1) im vorderen Bereich breiter wird, damit er beim Hochklappen in die Ruhestellung die Armlehnen (2) mitzieht, indem diese bis zu ihrer eigenen Ruhestellung geschwenkt werden.

2. Zusatzsitz für Fahrzeuge, nach Anspruch 1 **dadurch gekennzeichnet, dass** der breitere Bereich des Sitzkissens (1) in Übereinstimmung mit dem vorderen Bereich des Sitzes (1) zwei seitliche Vorsprünge (3) aufweist.

3. Zusatzsitz für fahrzeuge, nach dem Oberbegriff des ersten Anspruchs **dadurch gekennzeichnet, dass** die aus den Seitenteilen des Sitzkissens (1) hervorragenden Walzen oder Rollen (7) einen breiteren Bereich des Sitzkissens (1) begrenzen, damit die Armlehnen (2) beim Hochklappen des eigentlichen Sitzkissens (1) gleichzeitig in ihre eigene Ruhestellung gezogen werden.

4. Zusatzsitz für Fahrzeuge, nach dem Oberbegriff des ersten Anspruchs **dadurch gekennzeichnet, dass** die beiden frei verschwenkbaren oder nicht frei verschwenkbaren Gleitkufen einen breiteren Bereich des Sitzkissens (1) begrenzen, damit die Armlehnen (2) beim Hochklappen des eigentlichen Sitzkissens (1) gleichzeitig in ihre eigene Ruhestellung gezogen werden.

## Revendications

1. Siège auxiliaire pour véhicules, du type de ceux qui sont normalement montés à l'avant des véhicules destinés au transport de personnes, à côté du conducteur, et qui coïncident généralement avec la zone d'accès ou la porte avant du véhicule, où le coussin du siège (1) est doté de moyens automatiques de retour de la position d'utilisation à la position de repos, **caractérisé** essentiellement en ce que ce coussin (1) du siège présente des parties latérales saillantes (3) qui déterminent une plus grande largeur sur ce coussin (1) du siège sur sa partie avant, pour que lors de son rabattement en position de repos, il entraîne avec lui les accoudoirs (2), en les faisant basculer jusqu'à prendre leur position de repos.

2. Siège auxiliaire pour véhicules, selon la 1^{ère} revendication, **caractérisé en ce que** la partie ayant la plus grande largeur du coussin du siège (1) est déterminée par deux parties latérales et saillantes (3) en correspondance avec la partie avant dudit coussin du siège (1).

3. Siège auxiliaire pour véhicules, selon le préambule de la revendication 1, **caractérisé en ce qu'**un couple de rouleaux ou roues (7) qui émergent des parties latérales du coussin (1) du siège, limitent une partie de plus grande largeur du coussin (1) du siège, pour l'entraînement des accoudoirs (2) en position de repos lors du rabattement du coussin (1) du siège.

4. Siège auxiliaire pour véhicules, selon le préambule de la revendication 1, **caractérisé en ce que** deux patins coulissants avec ou sans rotation libre limitent une partie de plus grande largeur du coussin (1) du siège pour l'entraînement des accoudoirs (2) en position de repos lors du rabattement du coussin (1) du siège.
